(19) Europäisches Patentamt
European Patent Office
Office européen des brevets

(11) Veröffentlichungsnummer: **0 059 446**
**B1**

(12) # EUROPÄISCHE PATENTSCHRIFT

(45) Veröffentlichungstag der Patentschrift: **29.05.85**

(51) Int. Cl.⁴: **C 08 F 222/06**, C 11 D 3/37, D 21 H 3/38

(21) Anmeldenummer: **82101481.8**

(22) Anmeldetag: **26.02.82**

(54) **Verfahren zur Herstellung von Copolymerisaten des Maleinsäureanhydrids.**

(30) Priorität: **04.03.81 DE 3108100**

(43) Veröffentlichungstag der Anmeldung: **08.09.82 Patentblatt 82/36**

(45) Bekanntmachung des Hinweises auf die Patenterteilung: **29.05.85 Patentblatt 85/22**

(84) Benannte Vertragsstaaten: **BE CH DE FR GB IT LI NL**

(56) Entgegenhaltungen:
**DE - A - 2 229 402**
**US - A - 3 318 851**
**US - A - 3 530 102**
**US - A - 3 632 561**
**US - A - 3 729 451**
**US - A - 4 135 043**

(73) Patentinhaber: **BASF Aktiengesellschaft, Carl-Bosch-Strasse 38, D-6700 Ludwigshafen (DE)**

(72) Erfinder: **Messmer, Karlheinz, Dr., Budapester Strasse 24, D-6700 Ludwigshafen (DE)**
Erfinder: **Fischer, Hermann, Dr., Hardenburgstrasse 33, D-6703 Limburgerhof (DE)**
Erfinder: **Hartmann, Heinrich, Dr., Weinheimer Strasse 46, D-6703 Limburgerhof (DE)**
Erfinder: **Denziger, Walter, Wormser Landstrasse 65, D-6720 Speyer (DE)**
Erfinder: **Schneider, Rolf, Dr., Feldbergstrasse 21, D-6800 Mannheim (DE)**
Erfinder: **Wulz, Klaus, Dr., Gerolfstrasse 9, D-6715 Lambsheim (DE)**
Erfinder: **Raubenheimer, Hans-Juergen, Benzstrasse 6, D-6834 Ketsch (DE)**

EP 0 059 446 B1

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Aus der US-PS 4 135 043 ist ein Verfahren zur Herstellung von pulverförmigen hydrophilen Polymerisaten bekannt, bei dem als Hilfsflüssigkeit ausschließlich Wasser verwendet wird. Die Verwendung von Wasser als Verdünnungsmittel ist jedoch nicht frei von Nachteilen, weil die Polymerisation der Monomeren teilweise schon in den Zuführungsvorrichtungen der Monomeren in die Polymerisationszone beginnt und die Polymerisation bei Temperaturen von weit oberhalb 100° C durchgeführt werden muß, um das Wasser bei Normaldruck aus der Polymerisationszone zu entfernen. Maleinsäureanhydrid enthaltende Copolymerisate können nach diesem Verfahren nicht hergestellt werden, weil sich unter den Polymerisationsbedingungen aus Maleinsäureanhydrid und Wasser Maleinsäure bildet.

Copolymerisate aus Maleinsäureanhydrid und Alkylvinylether und/oder Alkenen werden üblicherweise durch radikalische Fällungspolymerisation der Monomerenmischungen in aromatischen Kohlenwasserstoffen in Gegenwart von Schutzkolloiden hergestellt. Um das pulverförmige Polymerisat zu isolieren, ist in der Regel ein aufwendiger Verfahrensschritt erforderlich, insbesondere dann, wenn es darauf ankommt, die aromatischen Kohlenwasserstoffe weitgehend aus dem Polymerisat zu entfernen.

Aufgabe der Erfindung ist es, ein Verfahren zur Herstellung von pulverförmigen Copolymerisaten des Maleinsäureanhydrids durch Copolymerisieren von Maleinsäureanhydrid mit Alkylvinylethern und/oder Alkenen in Gegenwart von Polymerisationsinitiatoren zur Verfügung zu stellen, bei dem man in relativ einfacher Weise lösungsmittelfreie Produkte erhält.

Die Aufgabe wird erfindungsgemäß dadurch gelöst, daß man eine Lösung oder eine Dispersion von Maleinsäureanhydrid in einem Alkylvinylether und/oder einem Alken, die pro Mol Maleinsäureanhydrid 3 bis 25 Mol eines Alkylvinylethers und/oder eines Alkens enthält, unter Polymerisationsbedingungen mit einem Pulverbett in Kontakt bringt, darin unter Umwälzung der Reaktionsmasse und Aufrechterhaltung des Pulverzustandes polymerisiert und die bei der Polymerisation entstehende Wärme durch Verdampfen von überschüssigen niedriger als Maleinsäureanhydrid siedenden Monomeren entfernt.

Vinylether, die mit Maleinsäureanhydrid copolymerisiert werden, sind bei Raumtemperatur entweder gasförmig oder flüssig. Geeignete Alkylvinylether sind beispielsweise $C_1$- bis $C_8$-, vorzugsweise $C_1$- bis $C_4$-Alkylvinylether, wie Methylvinylether, Ethylvinylether, Propylvinylether, Isopropylvinylether, Isobutylvinylether, n-Butylvinylether und Vinyl-2-ethylhexylether.

Die vorwiegend in Betracht kommenden Alkene sind Verbindungen mit 3 bis 10 Kohlenstoffatomen, z. B. Propylen, Isobuten, n-Buten, Diisobuten, Cyclopenten, Hexen, Cyclohexen, n-Octen, Cyclooocten und 1-Decen. Sie können z. B. mit Hilfe folgender Formel charakterisiert werden:

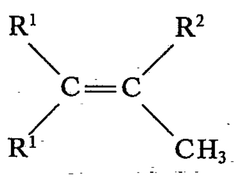

mit $R^1$, $R^2$ = H, $C_1$- bis $C_7$-Alkylgruppe, wobei $R^1$ und $R^2$ zu einem Kohlenwasserstoffzyklus verknüpft sein können. Vorzugsweise verwendet man aus dieser Gruppe von Monomeren Isobuten, 1-Hexen und Diisobuten. Von den höheren Alkenen werden vor allen Dingen solche eingesetzt, die eine endständige Doppelbindung haben.

Maleinsäureanhydrid und Alkylvinylether bzw. Maleinsäureanhydrid und Alkene polymerisieren bekanntlich im Molverhältnis 1 : 1 unter Bildung alternierender Copolymerisate. Das wesentliche Merkmal des erfindungsgemäßen Verfahrens besteht darin, pro Mol Maleinsäureanhydrid 3 bis 25, vorzugsweise 5 bis 15 Mol eines Alkylvinylethers oder Alkens oder einer Mischung von Verbindungen der beiden genannten Klassen einzusetzen.

Die überschüssigen Alkylvinylether bzw. Alkene dienen als Mittel zur Abfuhr der bei der Polymerisation entstehenden Wärme sowie der durch das Umwälzen des Pulverbetts entstehenden Wärme. Man kann jedoch auch Monomerenmischungen aus Maleinsäureanhydrid, einem oder mehreren Alkylvinylethern und einem oder mehreren Alkenen der Copolymerisation unterwerfen. So ist es beispielsweise möglich, Copolymerisate aus Maleinsäureanhydrid, Isobutylvinylether und Diisobuten oder Copolymerisate aus Maleinsäureanhydrid, Isobuten und Ethylvinylether herzustellen. In entsprechender Weise werden Copolymerisate hergestellt, die entweder zwei oder mehrere Alkylvinylether und Maleinsäureanhydrid oder zwei oder mehrere Alkene und Maleinsäureanhydrid enthalten. Die Copolymerisation erfolgt immer in Abwesenheit von Wasser, um eine Hydrolyse des Maleinsäureanhydrids auszuschließen.

Die Maleinsäureanhydrid-Copolymerisate können wahlweise durch Copolymerisieren der oben angegebenen Monomeren in Gegenwart von anderen Monomeren modifiziert werden. Hierfür kommen beispielsweise ethylenisch ungesättigte $C_3$- bis $C_5$-Carbonsäuren, deren Ester, Amide, Nitrile und/oder Vinylester sowie Styrol in Betracht. Von den ethylenisch ungesättigten Carbonsäuren verwendet man vorzugsweise Acrylsäure und Methacrylsäure. Die Ester der ethylenisch ungesättigten $C_3$- bis

$C_5$-Carbonsäuren leiten sich vorwiegend von einwertigen $C_1$- bis $C_{18}$-, vorzugsweise $C_1$- bis $C_8$-Alkoholen ab. Vorzugsweise werden als andere Monomere die Acrylsäure- und Methacrylsäureester von Methanol, Ethanol, n-Butanol, Isobutanol, und 2-Ethylhexanol eingesetzt. Von den Amiden und Nitrilen kommen hauptsächlich Acrylnitril und Methacrylnitril sowie Acrylamid und Methacrylamid in Betracht. Die Maleinsäureanhydrid-Copolymerisate können auch durch Copolymerisieren mit Dialkylamino-$C_1$- bis $C_6$-Alkylacrylaten oder den entsprechenden Methacrylaten modifiziert werden, z. B. Dimethylaminoethylacrylat, Diethylaminoethylacrylat, Diethylaminopropylacrylat und Dimethylaminopropylmethacrylat. Eine weitere Gruppe von Monomeren sind Vinylester, die sich von gesättigten Carbonsäuren mit 2- bis 22 Kohlenstoffatomen ableiten. Vorzugsweise verwendet man Vinylacetat und Vinylpropionat. Die Monomeren dieser Gruppe werden nur wahlweise zur Modifizierung der Maleinsäureanhydrid-Copolymerisate eingesetzt und können maximal bis zu 25 Mol-%, bezogen auf Maleinsäureanhydrid, am Aufbau der Copolymerisate beteiligt sein.

Eine weitere Modifizierung der Eigenschaften der Maleinsäureanhydrid-Copolymerisate ist dadurch möglich, daß man die Copolymerisation zusätzlich in Gegenwart von vernetzend wirkenden Monomeren durchführt. Dadurch erreicht man eine Erhöhung des Molekulargewichts der Copolymerisate. Geeignete vernetzend wirkende Monomere sind beispielsweise Verbindungen mit mindestens zwei ethylenisch ungesättigten Doppelbindungen, wie Divinylbenzol, Divinylketon, 1,4-Butadien, Ethylenglykoldiacrylat, Ethylenglykoldimethacrylat, Divinylether, Divinyldioxan, Polyalkenylpolyether wie Polyallyl- und Polyvinylether von Polysacchariden, Diallylacrylamid, Polyallyl- und Polyvinylsilane wie Tetravinylsilan, Triallylcyanurat, Butandioldivinylether, Glykoldivinylether, und Diacrylate wie Butandioldiacrylat, Butandioldimethacrylat und Glykoldiacrylat. Besondere Bedeutung aus dieser Gruppe von vernetzend wirkenden Monomeren haben die Polyallylether, wie Tri- oder Tetraallylether der Saccharose und des Pentaerythrits sowie Hexaallylether von Succhrose. Die vernetzend wirkenden Monomeren werden, bezogen auf Maleinsäureanhydrid, in einer Menge von 0,01 bis 5, vorzugsweise 0,1 bis 2 Mol-% eingesetzt.

Die Copolymerisation wird mit Hilfe der üblichen radikalischen Katalysatoren initiiert. Geeignet sind beispielsweise organische Peroxide, wie Dialkylperoxide, Perketale, Alkylperester, Diacylperoxide, Peroxidicarbonate und Hydroperoxide, Azoverbindungen und C-C-labile Verbindungen, z. B. Hexaphenylethan und 2,3-Dimethyl-2,3-diphenylbutan. Die Copolymerisation kann auch bei relativ niedriger Temperatur (Raumtemperatur) durchgeführt werden, sofern man als Polymerisationsinitiatoren sogenannte Redox-Katalysatoren verwendet, z. B. Kombinationen organischer Peroxide und Ascorbinsäure oder Kombinationen aus Peroxidicarbonaten und Benzoin. Die Polymerisationsinitiatoren können auch zusammen mit einem geeigneten Beschleuniger eingesetzt werden. Geeignet sind beispielsweise Amine mit cyclischem oder phenylischem Grundkörper allein oder in Gegenwart organischer Übergangsmetallverbindungen. Bei der Copolymerisation können auch Mischungen von verschiedenen Polymerisationsinitiatoren eingesetzt werden, die eine unterschiedliche Zerfallstemperatur aufweisen.

Zur Regelung des Molekulargewichts der Copolymerisate können die bekannten Regler in den üblicherweise angewendeten Mengen verwendet werden. Als Regler eignen sich beispielsweise Mercaptane, wie Dodecylmercaptan, Aldehyde wie Butyraldehyd, Alkohole, z. B. Isopropanol oder organische Komplexverbindungen von Eisen, Mangan, Kobalt, Nickel und Kupfer, z. B. die jeweiligen Acetylacetonate oder Naphthenate. Bei vorhandener Dispergierbarkeit ist auch eine Verwendung von anorganischen und organischen Übergangsmetallsalzen sinnvoll.

Die Polymerisation der Monomeren wird in einem Pulverbett vorgenommen. Als Pulver eignen sich sowohl anorganische als auch organische pulverförmige Materialien. Geeignet sind beispielsweise Quarzmehl, Talkum, Aluminiumoxid, Ruß, Holzmehl, Kochsalz oder Glasperlen. Als anorganische pulverförmige Materialien eignen sich nicht nur inerte Stoffe sondern auch z. B. Soda, Pottasche, Ammoniumcarbonat, Ammoniumcarbaminat, Natriumhydrogencarbonat, Erdalkalimetalloxide, wie Magnesiumoxid und Kalziumoxid. Bei Einsatz der zuletzt genannten pulverförmigen Stoffe erhält man bei der Polymerisation von Säuregruppen enthaltenden Monomeren teil- oder vollständig neutralisierte Polymerisate. Säuregruppen enthaltende Monomere, z. B. Acrylsäure oder Methacrylsäure, die mit Maleinsäureanhydrid und einem Alkylvinylether und/oder einem Alken copolymerisiert werden, können auch vor, während oder nach der Copolymerisation durch Einleiten von Ammoniak oder Aminen in das Pulverbett teilweise oder vollständig neutralisiert werden. Vorzugsweise legt man in der Polymerisationszone jedoch ein inertes pulverförmiges Polymerisat vor, das der Zusammensetzung des sich aus dem Monomerengemisch neu bildenden Polymerisats entspricht. Diese Polymerisate werden — falls kein pulverförmiges Polymerisat zur Verfügung stehen sollte — nach bekannten Polymerisationsverfahren hergestellt, z. B. durch Polymerisieren der Monomeren in Substanz und Zerkleinern des festen Polymerisates, durch Polymerisieren einer Wasser-in-Öl-Emulsion der Monomeren und Ausfällen und Isolieren des gebildeten Polymerisates oder durch Fällungs- oder Perlpolymerisation. Die Korngröße des pulverförmigen Polymerisates bzw. des inerten pulverförmigen anorganischen Materials liegt in dem Bereich zwischen 0,05 und 4 mm, vorzugsweise zwischen 0,5 und 2 mm.

Als Polymerisationsreaktoren kommen beispielsweise Kessel, Rührautoklaven, gegebenenfalls als mehrstufige Kaskade oder auch Kombinationen von Rührkesseln mit nachgeschaltetem Strömungsrohr in Betracht.

Der Pulverzustand in der Polymerisationszone wird während der gesamten Polymerisationsdauer

aufrechterhalten, wobei gleichzeitig für eine gute Durchmischung der Reaktionsmasse Sorge getragen wird. Maleinsäureanhydrid wird in Form einer Lösung oder Dispersion in mindestens einem der in Betracht kommenden Monomeren in feiner Verteilung auf das Pulver in der Polymerisationszone aufgebracht. Dieser Verfahrensschritt geschieht in der Regel durch Versprühen der Monomerlösung bzw. man läßt die Monomerlösung durch ein Rohr auf das Pulverbett laufen. In manchen Fällen kann es zweckmäßig sein, daß die Zugabestelle der Monomerlösung im Pulverbett liegt. In anderen Fällen geschieht das Zerstäuben der Monomerlösung ebenfalls im Pulverbett. Die Copolymerisation erfolgt in einem quasi stationären Zustand, d. h. Maleinsäureanhydrid wird zusammen mit einem oder mit den anderen Monomeren dem Polymerisationsreaktor mit einer Geschwindigkeit zugeführt, in der es polymerisiert. Dieser Verfahrensschritt kann entweder kontinuierlich oder absatzweise erfolgen.

Während der Polymerisation muß die Reaktionsmasse in einem ausreichenden Maße umgewälzt werden. Dies geschicht vorzugsweise durch Rühren. Die bei der Polymerisation entstehende Wärme sowie durch die Umwälzung des Pulvers resultierende Wärme werden durch Verdampfung der niedriger siedenden Monomeren aus der Polymerisationszone entfernt. In untergeordnetem Maß kann ein geringer Teil der Wärme auch durch Kühlen der Reaktorwand abgeführt werden. Die Monomerlösungen, die dem Pulverbett zugeführt werden, enthalten in der Regel 3 bis 30 Gew.-% Maleinsäureanhydrid. Die niedriger siedenden Monomeren, die aus der Polymerisationszone vorzugsweise destillativ entfernt werden, werden kondensiert und dem Reaktor in dem gerade erforderlichen Verhältnis zu den anderen Monomeren wieder zugeführt.

Maleinsäureanhydrid wird immer gelöst oder dispergiert in mindestens einem Monomeren der Polymerisationszone zugeführt. Verwendet man mehrere andere Monomere, so ist es möglich, diese separat vom Maleinsäureanhydrid in die Polymerisationszone einzubringen. Die Peroxide werden in aller Regel ebenfalls gelöst oder dispergiert in einem Monomeren der Polymerisationszone zugeführt.

Die Polymerisationstemperatur kann in einem weiten Bereich schwanken. Sie liegt zwischen 20 und 170, vorzugsweise zwischen 45 und 110°C. Die höchstmögliche Temperatur ist durch den Schmelzpunkt bzw. den Erweichungsbereich des Copolymerisates gegeben. Die maximale Temperatur sollte etwa 5°C unterhalb des beginnenden Erweichungsbereiches des Copolymerisates liegt. Die Copolymerisation wird vorzugsweise bei Normaldruck durchgeführt. Wenn jedoch sehr niedrig siedende Monomere, wie Methylvinylether oder Propylen, copolymerisiert werden sollen, ist es erforderlich, die Copolymerisation bei erhöhten Drücken vorzunehmen. Ebenso kann es notwendig sein, zum Verdampfen von höher siedenden Monomeren während der Copolymerisation unter einem Druck zu arbeiten, der unterhalb des Normaldrucks liegt. Somit ergibt sich für die Copolymerisation ein Bereich für den Druck, der zwischen 0,05 und 100, vorzugsweise zwischen 0,2 und 16 bar liegt.

Die Verweilzeit liegt zwischen 0,2 und 15, vorzugsweise 2 und 8 Stunden. Das Polymerisat wird aus der Reaktionszone entweder kontinuierlich, z. B. mit Hilfe einer Schnecke oder absatzweise aus der Reaktionszone entfernt.

Um Polymerisatpulver mit einem besonders niedrigen Monomerengehalt herzustellen, wird im Anschluß an die Hauptpolymerisation eine Nachpolymerisation durchgeführt. Für diese Arbeitsweise eignet sich vor allem ein Polymerisieren in einer Kaskade. Das aus dem ersten Reaktor ausgetragene Pulver wird dann in einen zweiten Reaktor überführt, in dem es auf eine höhere Temperatur erhitzt wird. Außerdem kann in dem Nachpolymerisationsreaktor ein Peroxid eingetragen werden. Vorteilhafterweise vewendet man dafür Peroxide, die bei einer höheren Temperatur zerfallen als die für die Hauptpolymerisation verwendeten. Die Temperatur bei der Nachpolymerisation liegt im allgemeinen 5 bis ca. 80°C über derjenigen der Hauptpolymerisation. Für die Nachpolymerisation verwendet man 0,05 bis 10, vorzugsweise 0,15 bis 5 Mol-% eines Polymerisationsinitiators pro Mol der restlichen Monomeren im Copolymerisatgemisch.

Nach dem erfindungsgemäßen Verfahren erhält man direkt pulverförmige Polymerisate, die keiner weiteren Reinigung mehr bedürfen. Ein sehr wichtiger Vorteil dieses Verfahrens ist die Tatsache, daß man lösungsmittelfreie pulverförmige Copolymerisate erhält. Der Teilchendurchmesser der Pulver liegt in dem Bereich von 10 µm bis 2 cm, er beträgt vorzugsweise 0,1 bis 5 mm. Gegenüber bekannten Verfahren ist ein weiterer Vorteil darin zu sehen, daß man praktisch nicht staubende pulverförmige Copolymerisate erhält.

Die Copolymerisate des Maleinsäureanhydrids eignen sich in Form ihrer Salze beispielsweise als Inkrustierungsinhibitoren für Waschmittel und als Dispergiermittel, insbesondere als Dispergiermittel für Pigmente zur Herstellung von Papierstreichmassen, als Papierleimungsmittel, als Klebstoffhilfsmittel, als Verdickungsmittel und in Form der Monoalkylester mit 1 bis 4 C-Aomen in der Alkylkette als Kosmetikhilfsmittel. Copolymerisate des Maleinsäureanhydrids, die vernetzend wirksame Monomere einpolymerisiert enthalten, werden vor allem als Verdickungsmittel für wäßrige Polymerisatlösungen oder Dispersionen verwendet.

Die Angaben in Prozent in den Beispielen sind Gewichts-%, sofern nichts anderes angegeben ist. Die K-Werte wurden nach H. Fikentscher, Cellulosechemie 13, 58—64 und 71—74 (1932) bei einer Temperatur von 25°C bestimmt, dabei bedeutet $K = k \cdot 10^3$.

## Beispiel 1

### Herstellung eines Copolymerisats aus Maleinsäureanhydrid und Vinylethylether im Molverhältnis 1 : 1

Dieses Copolymerisat wurde diskontinuierlich hergestellt. Als Polymerisationsreaktor diente ein zylindrisches Glasgefäß von 5 l Inhalt, das mit einem Wendelrührer und einem absteigenden Kühler ausgestattet war. In das Glasgefäß mündete eine Sprühdüse, durch die das Monomerengemisch zusammen mit dem Initiator auf das vorgelegte pulverförmige Polymerisat aufgesprüht wurde. In das Glasgefäß mündete außerdem eine Stickstoffleitung, um die Polymerisation unter Stickstoffatmosphäre durchzuführen. Die Beheizung des Polymerisationsgefäßes erfolgte mit Hilfe eines Ölbades. Das Monomerengemisch wurde mit einer Lösung des Polymerisationsinitiators in Vinylethylether in einem statischen Mischer gemischt. In die Leitung, durch die das Monomerengemisch zum statischen Mischer geführt wurde, war ein Wärmetauscher eingebaut, so daß bei Bedarf gekühlt werden konnte. Zwischen Polymerisationsgefäß und Kühler ist ein Abscheider eingebaut, um eventuell durch den Stickstoffstrom bzw. das verdampfende überschüssige Monomere mitgerissene Feststoffe abzuscheiden. In der oben beschriebenen Vorrichtung wurden 1500 g eines pulverförmigen Polyamids aus Adipinsäure und Hexamethylendiamin mit einem Korndurchmesser von 1 bis 2 mm vorgelegt und unter intensiver Umwälzung auf eine Temperatur von 60° C erwärmt.

Eine Lösung von 4,98 g Benzoin und 250 g Maleinsäureanhydrid in 1506 g Vinylethylether wurde in einem statischen Mischer mit einer Initiatorlösung aus 7,02 g Bis-(4-t-butyl-cyclohexyl)-peroxidicarbonat und 3,37 g Dioctanoylperoxid in 1000 ml Vinylethylether im Volumenstromverhältnis von etwa 2 : 1 zusammengeführt und im Verlauf von 5 Stunden sukzessive auf das bewegte Feststoffbett aus pulverförmigem Polyamid aufgesprüht. Das Molverhältnis von Maleinsäureanhydrid zu Vinylethylether betrug etwa 1 : 12. Die Polymerisationstemperatur betrug 60° C. Während der Polymerisation wurde der Pulverzustand in der Polymerisationszone aufrechterhalten und der überschüssige Ethylvinylether (ca. 2050 g) durch die bei der Polymerisation freiwerdende Wärme und die dem System in Folge des Rührens des Pulverbetts zugeführte Energie kontinuierlich aus der Reaktionszone verdampft und am absteigenden Kühler kondensiert. Das vom inerten Vorlagematerial abgetrennte Copolymerisat aus Maleinsäureanhydrid und Ethylvinylether hatte einen K-Wert von 47 (gemessen in 1%iger Lösung in Cyclohexanon). Der Restmonomerengehalt lag unterhalb von 0,1%. Das Copolymerisat wird nach Neutralisation mit Natronlauge als Inkrustations- und Vergrauungsinhibitor in Haushaltswaschmitteln eingesetzt.

## Beispiel 2

### Herstellung eines Copolymerisates aus Maleinsäureanhydrid und Ethylvinylether im Molverhältnis 1 : 1

In der in Beispiel 1 beschriebenen Polymerisationsapparatur wurden 1500 g eines Copolymerisates aus Maleinsäureanhydrid und Ethylvinylether mit einem Korndurchmesser von 1 bis 2 mm vorgelegt und unter ständiger Umwälzung auf eine Temperatur von 60° C erwärmt. Dann wurde eine Lösung von 250 g Maleinsäureanhydrid, 4,98 g Benzoin und 0,24 g Eisen(III)acetylacetonat in 1506 g Ethylvinylether mit einer Lösung eines Polymerisationsinitiators aus 23,4 g Bis-(4-t-butylcyclohexyl)-peroxidicarbonat und 10,1 g Dioctanoylperoxid in 1000 ml Ethylvinylether in dem statischen Mischer im Volumenstromverhältnis von ca. 2 : 1 zusammengeführt und im Verlauf von 6 Stunden kontinuierlich auf das Feststoffbett aufgesprüht. Das Molverhältnis von eingesetztem Maleinsäureanhydrid zu Vinylethylether betrug etwa 1 : 12. Die Polymerisationstemperatur betrug 60° C. Während der Polymerisation wurde der Pulverzustand in der Polymerisationszone aufrechterhalten und der überschüssige Ethylvinylether kontinuierlich abdestilliert. Man erhielt ein Copolymerisat, das einen K-Wert von 24 (gemessen in 1%iger Lösung in Cyclohexanon) und einen Restmonomerengehalt von weniger als 0,1% hatte. Das Copolymerisat wird nach Neutralisation mit Natronlauge als Dispergiermittel für Pigmente zum Herstellen von Papierstreichmassen verwendet.

## Beispiel 3

### Herstellung eines Copolymerisates aus Maleinsäureanhydrid und Vinylisobutylether im Molverhältnis 1 : 1

In der in Beispiel 1 beschriebenen Vorrichtung wurden 1200 g eines Copolymerisates aus Maleinsäureanhydrid und Vinylisobutylether mit einem Korndurchmesser von 0,1 mm vorgelegt. Die Temperatur des Ölbades wurde auf 100° C eingestellt. Dann wurde eine Lösung von 250 g Maleinsäureanhydrid in 2000 g Vinylisobutylether mit einer Lösung eines Polymerisationsinitiators aus 7,02 g Bis-(4-t-butylcy-

clohexyl)-peroxidicarbonat und 3,37 g Dioctanoylperoxid in 1000 ml Vinylisobutylether im Volumenstromverhältnis von 2,5 : 1 zusammengeführt und im Verlauf von 5 Stunden sukzessive auf das bewegte Feststoffbett aufgesprüht. Das Molverhältnis von eingesetztem Maleinsäureanhydrid zu Vinylisobutylether lag bei 1 : 11. Während der Polymerisation wurde der Pulverzustand aufrechterhalten und der überschüssige Vinylisobutylether kontinuierlich abdestilliert. Das Polymerisat hatte einen K-Wert von 60 (1%ig in Aceton) und war praktisch frei von restlichen Monomeren.

Beispiel 4

Herstellung eines Copolymerisates aus Maleinsäureanhydrid und Vinylmethylether im Molverhältnis 1 : 1

Als Polymerisationsvorrichtung wurde eine Apparatur verwendet, die der im Beispiel 1 angegebenen entsprach, jedoch anstelle der Glasteile aus Stahl aufgebaut war. Hierin wurden 1500 g eines Copolymerisates aus Maleinsäureanhydrid und Vinylmethylether mit einem Korndurchmesser von 1 bis 2 mm vorgelegt und unter ständiger Umwälzung auf eine Temperatur von 60° C erwärmt. Durch Aufpressen von Stickstoff wurde ein Druck von ca. 2,8 bar eingestellt. Dann wurde eine Lösung von 250 g Maleinsäureanhydrid, 4,98 g Benzoin in 1650 g Methylvinylether mit einer Lösung eines Polymerisationsinitiatorgemisches aus 7,02 g Bis-(4-t-butylcyclohexyl)-peroxidicarbonat und 3,37 g Dioctanoylperoxid in 500 g Methylvinylether in dem statischen Mischer im Volumenstromverhältnis von 3,5 : 1 zusammengeführt und im Verlauf von 6 Stunden kontinuierlich auf das Feststoffbett aufgesprüht. Das Molverhältnis von eingesetztem Maleinsäureanhydrid zu Vinylmethylether lag bei etwa 1 : 14,5. Die Polymerisationstemperatur betrug 60° C. Während der Polymerisation wurde der Pulverzustand in der Polymerisationszone aufrechterhalten und der überschüssige Methylvinylether kontinuierlich über eine Druckhaltung entspannt. Man erhielt ein Copolymerisat aus Maleinsäureanhydrid und Vinylmethylether im Molverhältnis 1 : 1, das einen K-Wert von 40 (gemessen in 0,1%iger Lösung in Aceton) hatte.

Beispiel 5

Herstellung eines Copolymerisates aus Maleinsäureanhydrid Vinylethylether und Acrylsäure im Molverhältnis 1 : 0,9 : 0,1

In der im Beispiel 1 angegebenen Polymerisationsapparatur wurden 1500 g eines Copolymerisates aus Maleinsäureanhydrid und Acrylsäure mit einem Korndurchmesser von etwa 2 mm vorgelegt und unter Umwälzung auf eine Temperatur von 60° C erwärmt. Dann wurde eine Lösung von 250 g Maleinsäureanhydrid, 18,4 g Acrylsäure und 4,98 g Benzoin in 1506 g Ethylvinylether mit einer Lösung eines Initiatorgemisches aus 7,02 g Bis-(4-t-butylcyclohexyl)-peroxidicarbonat und 3,37 g Dioctanoylperoxid in 1000 ml Vinylethylether in einem statischen Mischer im Volumenstromverhältnis von ca. 2 : 1 zusammengeführt und über 6 Stunden kontinuierlich auf das Feststoffbett aufgesprüht. Die Molverhältnisse der eingesetzten Stoffe von Maleinsäureanhydrid : Acrylsäure : Vinylethylether = 1 : 0,1 : 12. Die Polymerisationstemperatur betrug 60° C. Während der Polymerisation wurde der Pulverzustand in der Polymerisationszone aufrechterhalten und der überschüssige Ethylvinylether durch die bei der Polymerisation entstehende Wärme kontinuierlich abdestilliert. Man erhielt 1950 g Polymerisat mit einem K-Wert von 45 (gemessen nach Neutralisation in einer Konzentration von 0,5% in 5%iger Kochsalzlösung). Das Copolymerisat ist in verdünnter Natronlauge leicht löslich und kann als Dispergiermittel für Pigmente zur Herstellung von Papierstreichmassen verwendet werden.

Beispiel 6

Herstellung eines Copolymerisates aus Maleinsäureanhydrid und 1-Hexen

In der im Beispiel 1 beschriebenen Vorrichtung wurden 1500 g Maleinsäureanhydrid/1-Hexen-Copolymerisat vorgelegt und auf eine Temperatur von 80° C aufgeheizt. Dann wurde eine warm bereitete Dispersion von 300 g Maleinsäureanhydrid in 1500 g 1-Hexen mit der Lösung eines Polymerisationsinitiators aus 13,8 g Bis-(4-t-butylcyclohexyl)-peroxidicarbonat in 500 ml 1-Hexen im Volumenstromverhältnis von etwa 3 : 1 zusammengeführt und während 6 Stunden kontinuierlich auf das bewegte Vorlagematerial aufgesprüht. Das Molverhältnis von Maleinsäureanhydrid zu 1-Hexen lag bei etwa 1 : 7,2. Während der Polymerisation wurde für eine Umwälzung des Feststoffbettes Sorge getragen. Die Polymerisationstemperatur betrug 75° C. Das überschüssige 1-Hexen wurde kontinuierlich durch Verdampfen aus der Reaktionszone entfernt. Das erhaltene Copolymerisat hatte einen K-Wert von 35.

Beispiel 7

Herstellung eines Copolymerisates aus Maleinsäureanhydrid und i-Buten

In einer Stahlapparatur, ähnlich der im Beispiel 1 beschriebenen Vorrichtung wurden 1500 g eines Maleinsäureanhydrid/i-Buten-Copolymerisates vorgelegt. Im Reaktor herrschte ein Druck von etwa 4,5 bar. Die Temperatur des Ölbads wurde auf 65°C eingestellt. Eine unter Druck warm bereitete Dispersion aus 600 g Maleinsäureanhydrid in 2100 g i-Buten wurde dann in dem statischen Mischer mit einer Starterlösung aus 27,6 g Bis-(4-t-butylcyclohexyl)-peroxidicarbonat in 300 g i-Buten mit 1 g Hydrochinonmonomethylether im Volumenstromverhältnis von ca. 8 : 1 zusammengeführt und im Verlauf von 8 Stunden kontinuierlich auf das bewegte Vorlagematerial aufgesprüht. Das Molverhältnis von eingesetztem Maleinsäureanhydrid zu i-Buten betrug etwa 1 : 9. Während der Polymerisation wurde für eine gute Umwälzung des Feststoffbettes gesorgt. Die Polymerisationstemperatur betrug 65°C. Das in die Polymerisationszone eingebrachte überschüssige i-Buten wurde kontinuierlich durch Entspannungsverdampfung aus der Reaktionszone entfernt. Man erhielt dann ein Copolymerisat aus Maleinsäureanhydrid und i-Buten, das einen K-Wert von 35 hatte. Der Korndurchmesser des Polymerisates betrug 0,1 bis 3 mm. Das Copolymerisat wird als Inkrustierungsinhibitor in Waschmitteln verwendet.

Beispiel 8

Herstellung eines Copolymerisates aus Maleinsäureanhydrid und Diisobuten

In der im Beispiel 1 beschriebenen Vorrichtung wurden 1500 g eines Maleinsäureanhydrid/Diisobuten-Copolymerisates vorgelegt. Der Reaktionsdruck betrug 100 Torr. Die Temperatur des Ölbads wurde auf 80°C eingestellt. Eine warm bereitete Dispersion aus 300 g Maleinsäureanhydrid in 2100 g Diisobuten (Gemisch aus 80 Gew.-% 2,4,4'-Trimethylpenten-1 und 20 Gew.-% 2,4,4'-Trimethylpenten-2) wurde dann in einem statischen Mischer mit einer Starterlösung aus 13,8 g Bis-(4-t-butylcyclohexyl)-peroxidicarbonat in 500 ml Diisobuten im Volumenstromverhältnis von etwa 6 : 1 zusammengeführt und im Verlauf von 6 Stunden kontinuierlich auf das bewegte Vorlagematerial aufbesprüht. Das Molverhältnis von Maleinsäureanhydrid zu Diisobuten lag bei etwa 1 : 7,2. Während der Polymerisation wurde für eine gute Umwälzung des Feststoffbettes gesorgt. Die Polymerisationstemperatur betrug 75°C. Das überschüssige Diisobuten wurde kontinuierlich durch Verdampfen aus der Reaktionszone entfernt. Das Copolymerisat aus Maleinsäureanhydrid und Diisobuten hatte einen K-Wert von 46. Der Korndurchmesser des Polymerisates betug 0,1 bis 2 mm. Das Copolymerisat wird als Oberflächenleimungsmittel für Papier verwendet.

Beispiel 9

Herstellung eines Copolymerisates aus Maleinsäureanhydrid und i-Buten
im Molverhältnis 1 : 1 mit Pentaerythrittriallylether

Als Polymerisationsvorrichtung wurde eine Apparatur verwendet, die der im Beispiel 1 angegebenen entsprach, jedoch anstelle der Glasteile aus Stahl aufgebaut war. Hierin wurden 1500 g eines Copolymerisates aus Maleinsäureanhydrid und i-Buten mit einem Korndurchmesser von 1 bis 2 mm vorgelegt und unter ständiger Umwälzung auf eine Temperatur von 60°C erwärmt. Durch Aufpressen von Stickstoff wurde ein Druck von ca. 4,5 bar eingestellt. Dann wurde eine unter Druck bereitete Dispersion von 300 g Maleinsäureanhydrid, 5 g Pentaerythrittriallylether und 4,98 g Benzoin in 1050 g i-Buten mit einer Lösung eines Polymerisationsinitiatorgemisches aus 7,02 g Bis-(4-t-butylcyclohexyl)-peroxidicarbonat und 3,37 g Dioctanoylperoxid in 150 g i-Buten in dem statischen Mischer im Volumenstromverhältnis von ca. 8 : 1 zusammengeführt und im Verlauf von 6 Stunden kontinuierlich auf das Feststoffbett aufgesprüht. Das Molverhältnis von eingegesetztem Maleinsäureanhydrid zu i-Buten lag bei etwas 1 : 9. Die Polymerisationstemperatur betrug 60°C. Während der Polymerisation wurde der Pulverzustand in der Polymerisationszone aufrechterhalten und das überschüssige i-Buten kontinuierlich über eine Druckhaltung entspannt. Man erhielt ein schwach vernetztes Copolymerisat aus Maleinsäureanhydrid und i-Buten im Molverhältnis von praktisch 1 : 1, das einen K-Wert von 65 (gemessen in 0,1%iger Lösung in Aceton) hatte. Dieses Polymerisat kann nach erfolgter Neutralisation als Verdickungsmittel für Papierstreichmassen oder wäßrige Druckpasten verwendet werden.

**Patentansprüche**

1. Verfahren zur Herstellung von pulverförmigen Copolymerisaten des Maleinsäureanhydrids durch Copolymerisieren von Maleinsäureanhydrid mit Alkylvinylethern und/oder Alkenen in Gegenwart von

Polymerisationsinitiatoren, dadurch gekennzeichnet, daß man eine Lösung oder Dispersion von Maleinsäureanhydrid in einem Vinylether und/oder einem Alkan, die pro Mol Maleinsäureanhydrid 3 bis 25 Mol eines Alkylvinylethers und/oder eines Alkens enthält, unter Polymerisationsbedingungen mit einem Pulverbett in Kontakt bringt, darin unter Umwälzung der Reaktionsmasse und Aufrechterhaltung des Pulverzustandes polymerisiert und die bei der Polymerisation entstehende Wärme durch Verdampfen von überschüssigen niedriger als Maleinsäureanhydrid siedenden Monomeren entfernt.

2. Verfahren nach Anspruch 1, dadurch gekennzeichnet, daß die Copolymerisation in Gegenwart von 0 bis 25 Mol-%, bezogen auf Maleinsäureanhydrid, an ethylenisch ungesättigten $C_3$- bis $C_5$-Carbonsäuren, deren Ester, Amide, Nitrile und/oder Vinylester sowie Styrol durchgeführt wird.

3. Verfahren nach den Ansprüchen 1 und 2, dadurch gekennzeichnet, daß die Copolymerisation in Gegenwart von 0 bis 5 Mol-%, bezogen auf Maleinsäureanhydrid, eines vernetzend wirkenden Monomeren durchgeführt wird.

4. Verfahren nach den Ansprüchen 1 bis 3, dadurch gekennzeichnet, daß die Temperatur bei der Copolymerisation in einem Bereich liegt, der von 20° C bis zu 5° C unterhalb des beginnenden Erweichungsbereiches des jeweiligen Copolymerisates reicht, wobei der Druck 0,05 bis 100 bar beträgt.

5. Verfahren nach den Ansprüchen 1 bis 4, dadurch gekennzeichnet, daß man Mischungen von Polymerisationsinitiatoren verwendet, die unterschiedliche Zerfallstemperaturen aufweisen.

6. Verfahren nach den Ansprüchen 1 bis 5, dadurch gekennzeichnet, daß man im Anschluß an die Hauptpolymerisation einen Polymerisationsinitiator zusetzt, der bei höherer Temperatur zerfällt als der für die Hauptpolymerisation verwendete und eine Nachpolymerisation bei einer Temperatur durchführt, die oberhalb der Temperatur bei der Hauptpolymerisation liegt.

7. Verwendung der nach den Ansprüchen 1 bis 6 erhaltenen Copolymerisate als Inkrustierungsinhibitoren für Waschmittel.

8. Verwendung der nach den Ansprüchen 1 bis 6 erhaltenen Copolymerisate als Dispergiermittel.

9. Verwendung der nach den Ansprüchen 1 bis 6 erhaltenen Copolymerisate als Leimungsmittel für Papier.

10. Verwendung der nach Anspruch 3 erhaltenen Copolymerisate als Verdickungsmittel für wäßrige Systeme.

## Claims

1. A process for the preparation of a maleic anhydride copolymer powder by copolymerization of maleic anhydride with alkyl vinyl ethers and/or alkenes in the presence of a polymerization initiator, wherein a solution or dispersion of maleic anhydride in a vinyl ether and/or an alkene, containing from 3 to 25 moles of the vinyl ether and/or alkene per mole of maleic anhydride, is brought into contact with a powder bed under polymerization conditions, and is polymerized in the bed whilst the reaction mass is circulated and the powder state is maintained, and the heat generated during polymerization is removed by evaporating excess monomer which boils lower than maleic anhydride.

2. A process as claimed in claim 1, wherein the copolymerization is carried out in the presence of from 0 to 25 mole-%, based on maleic anhydride, of ethylenically unsaturated $C_3$—$C_5$-carboxylic acids, their esters, amides, nitriles and/or vinyl esters, or styrene.

3. A process as claimed in claims 1 and 2, wherein the copolymerization is carried out in the presence of from 0 to 5 mole-%, based on maleic anhydride, of a crosslinking monomer.

4. A process as claimed in claims 1 to 3, wherein the temperature during copolymerization is from 20° C below to 5° C below the start of the softening range of the particular copolymer, the pressure being from 0.05 to 100 bar.

5. A process as claimed in claims 1 to 4, wherein a mixture of polymerization initiators having different decomposition temperatures is used.

6. A process as claimed in claims 1 to 5, wherein, following the main polymerization, a polymerization initiator which decomposes at a higher temperature than the initiator used for the main polymerization is added, and an after-polymerization is carried out at a temperature above the temperature of the main polymerization.

7. The use of a copolymer obtained as claimed in claims 1 to 6 as a scale inhibitor for detergents.

8. The use of a copolymer obtained as claimed in claims 1 to 6 as a dispersant.

9. The use of a copolymer obtained as claimed in claims 1 to 6 as a paper-sizing agent.

10. The use of a copolymer obtained as claimed in claim 3 as a thickener for aqueous systems.

## Revendications

1. Procédé de préparation de copolymérisats pulvérulents de l'anhydride maléique, par copolymérisation d'anhydride maléique avec des éthers alkylvinyliques et/ou alcènes en présence d'initiateurs de polymérisation, caractérisé par le fait que l'on met en contact avec un lit pulvérulent, dans des conditions de polymérisation, une solution ou dispersion d'anhydride maléique dans un éther vinylique

et/ou un alcène, qui contient, par mole d'anhydride maléique, 3 à 25 moles d'un éther alkylvinylique et/ou d'un alcène, on y polymérise, en faisant circuler la masse de réaction et en maintenant l'état pulvérulent, et on évacue la chaleur produite par la polymérisation, par vaporisation des monomères en excès, à point d'ébullition inférieur à celui de l'anhydride maléique.

2. Procédé selon la revendication 1, caractérisé par le fait que la copolymérisation est effectuée en présence de 0 à 25 moles-%, rapporté à l'anhydride maléique, d'acides carboxyliques en $C_3$ à $C_5$, à insaturation éthyléniques, leurs esters, amides, nitriles et/ou éthers vinyliques, ainsi que de styrène.

3. Procédé selon les revendications 1 et 2, caractérisé par le fait que la copolymérisation est effectuée en présence de 0 à 5 moles-%, rapporté à l'anhydride maléique, d'un monomère à effet réticulant.

4. Procédé selon les revendications 1 à 3, caractérisé par le fait que la température, lors de la copolymérisation, est située dans une zone qui atteint de 20° C à 5° C au-dessous de de la zone de début de ramollissement du copolymérisat respectif, la pression étant de 0,05 à 100 bar.

5. Procédé selon les revendications 1 à 4, caractérisé par le fait que l'on utilise des mélanges d'initiateurs de polymérisation qui présentent des températures de décomposition différentes.

6. Procédé selon les revendications 1 à 5, caractérisé par le fait qu'à la suite de la polymérisation principale, on ajoute un initiateur de polymérisation qui se décompose à une température plus élevée que celui utilisé pour la polymérisation principale et on effectue une post-polymérisation à une température qui est supérieure à la température de la polymérisation principale.

7. Utilisation des copolymérisats obtenus selon les revendications 1 à 6 comme inhibiteurs d'incrustation pour lessives.

8. Utilisation des copolymérisats obtenus selon les revendications 1 à 6 comme dispersants.

9. Utilisation des copolymérisats obtenus selon les revendications 1 à 6 comme agent d'encollage pour papier.

10. Utilisation des copolymérisats obtenus selon la revendication 3 comme épaississants pour systèmes aqueux.